# EUROPÄISCHE PATENTSCHRIFT

(11) **EP 2 237 581 B1**
(45) Veröffentlichungstag und Bekanntmachung des Hinweises auf die Patenterteilung: **21.08.2013**
(21) Anmeldenummer: 10158658.4
(22) Anmeldetag: 31.03.2010
(51) Int. Cl.: H04W 4/20

(54) **Verfahren und Anordnung zum Übermitteln einer vordefinierten Information bei Mobilfunkverbindungen**
Method and assembly for transferring predefined information for mobile connections
Procédé et agencement de transmission d'une information prédéfinie pour connexions de radios mobiles

(30) Priorität: 31.03.2009 DE 102009015214
(43) Veröffentlichungstag der Anmeldung: 06.10.2010
(73) Patentinhaber: Vodafone Holding GmbH, 40213 Düsseldorf (DE)
(72) Erfinder: ALKER, Stephan, 40822 Mettmann (DE); PAWLITZEK, Christian, 42799 Leichlingen (DE)
(74) Vertreter: CBDL Patentanwälte

(56) Entgegenhaltungen:
- EP-A2- 1 091 604
- WO-A1-2005/069657
- GB-A- 2 435 156

## Beschreibung

### TECHNISCHES GEBIET DER ERFINDUNG

Die Erfindung betrifft allgemein das Betreiben eines Mobilfunknetzes und insbesondere ein Verfahren und eine Anordnung zum Übermitteln einer vordefinierten Information beim Aufbau einer von einem mobilen Kommunikationsendgerät eines Kunden eines Mobilfunkanbieters abgehenden Mobilfunkverbindung zu einem angerufenen Endgerät. Genauer gesagt betrifft die Erfindung ein Verfahren und eine Anordnung zum Übermitteln besagter Information beim Aufbau der abgehenden Mobilfunkverbindung, wobei der Kunde über ein Teilnehmeridentifikationsmodul (nachfolgend auch kurz SIM-Karte genannt) verfügt, dem wenigstens eine Teilnehmeridentifikationsnummer (nachfolgend auch kurz IMSI genannt) zugeordnet ist, wobei jeder Teilnehmeridentifikationsnummer eine Rufnummer (nachfolgend auch kurz MSISDN genannt) zugeordnet ist, wobei jeder Rufnummer ein Teilnehmerprofil zugeordnet ist, wobei wenigstens eines der Teilnehmerprofile eine Dienstermächtigung zur Teilnahme an bestimmten zusätzlichen Diensten enthält, wobei der Rufaufbau unter Verwendung einer ISUP-Signalisierungsnachricht mit einem Generic-Number-Feld erfolgt.

### HINTERGRUND DER ERFINDUNG

Auf dem Gebiet der Erfindung sind unterschiedliche Verfahren und Anordnungen zum Übermitteln vordefinierter Informationen bekannt, die sich mit dem Problem beschäftigen, daß anstelle der standardmäßig an ein angerufenes Endgerät übertragenen Rufnummer des Anrufers eine andere Rufnummer an das angerufene Endgerät zur dortigen Anzeige übertragen werden soll. Es besteht nämlich auch im Mobilfunkbereich, insbesondere bei Firmenkunden, häufig der Wunsch, daß anstelle der Rufnummer, die über die Teilnehmeridentifikationsnummer demjenigen Teilnehmeridentifikationsmodul zugeordnet ist, das der Benutzer eines mobilen Kommunikationsendgerätes verwendet, eine andere Rufnummer auf dem Display eines angerufenen Endgerätes angezeigt wird, so wie dies im Festnetzbereich seit langem üblich ist. So wird bei vielen Firmen bei abgehenden Festnetzverbindungen statt der vollständigen Durchwahlnummer des Anrufers lediglich die Rufnummer der Zentrale übermittelt. Firmenmitarbeiter, die über Firmenhandys verfügen, möchten in der Regel nicht von Kunden in ihrer Freizeit gestört werden, so daß sie häufig die Rufnummernübertragung ihrer Handys ausschalten, was dann aber wiederum den Nachteil hat, daß dem angerufenen Teilnehmer die Mitteilung "Rufnummer unterdrückt" angezeigt wird, wobei viele Teilnehmer die Annahme solcher Anrufe verweigern.

Die Lösung dieses Problems ist nicht trivial, denn die in den jeweiligen Kommunikationsnetzen verwendeten Standards setzen den Mobilfunkanbietern, teilweise zur Erfüllung bestimmter gesetzlicher Erfordernisse, teilweise zur Ermöglichung der Interoperabilität der verschiedenen Elemente eines Kommunikationsnetzes überhaupt, enge Grenzen insbesondere hinsichtlich der Verwendung und des Aufbaus von Rufnummer, Teilnehmeridentifikationsnummern und Teilnehmeridentifikationsmodul. So läßt es z.B. das Sicherheitskonzept des GSM-Standards nicht zu, daß zwei identische Teilnehmeridentifikationsmodule mit identischen Teilnehmeridentifikationsnummern und Authentifikationsschlüsseln hergestellt und in Betrieb genommen werden können.

Zur zumindest partiellen Lösung des genannten Problems bieten verschiedene Telekommunikationsnetzbetreiber Lösungen an, bei denen der von einem mobilen Kommunikationsendgerät abgehende Anruf zunächst an eine zentrale Stelle, z.B. die Firmenzentrale der Firma, bei der der Anrufer beschäftigt ist, geleitet wird, von wo aus dann eine Verbindung zu dem eigentlich gewünschten Endgerät hergestellt wird. Diese Lösungen sind jedoch aufwendig und teuer.

Die GB 2 435 156 A lehrt ein Kommunikationssystem, bei dem ein Teilnehmer über zwei oder mehr Kommunikationsendgeräte mit jeweils einem Teilnehmeridentifikationsmodul mit einer jeweils zugeordneten MSISDN und

IMSI verfügen kann, denen aber nur eine öffentliche Adresse zugeordnet ist, die abgehenden Anrufen zugeordnet wird.

Die WO 2005/069657 A1 lehrt ein Verfahren und eine Vorrichtung zur Auswahl einer Mobilfunkteilnehmeridentität aus zwei unterschiedlichen Teilnehmeridentifikationsmodulen, die in einem Gerät angeordnet sind, bzw. von einem Teilnehmeridentifikationsmodul mit zwei oder mehr Identitäten wird eine Mobilfunkteilnehmeridentität ausgewählt und dem Empfänger übertragen.

Aus der EP 1 091 604 A2 ist ein Verfahren bekannt, das die gesonderte Erfassung privater und geschäftlicher Telefonate beim Betreiben eines Kommunikationsendgerätes ermöglicht, wobei dem Kommunikationsendgerät (wiederum über eine SIM-Karte) eine Teilnehmeridentifikationsnummer zugeordnet ist, wobei der Teilnehmeridentifikationsnummer mindestens zwei Rufnummern zugeordnet sind und jeder Rufnummer ein Teilnehmerprofil zugeordnet ist. Eine Dienstelogik in einem Kommunikationsnetz entscheidet dann, welches Teilnehmerprofil bei einem Ruf zu oder von diesem Kommunikationsendgerät angewendet wird. Bei abgehenden Rufen kann der Nutzer mit der Wählprozedur, beispielsweise mit einem Sonderzeichen wie "*" oder "#" am Anfang oder am Ende der gewählten Rufnummer, entscheiden, in welche Kategorie (beruflich oder privat) der aktuelle Ruf fallen soll.

Das in der genannten EP 1 091 604 A2 beschriebene Verfahren ermöglicht vorteilhaft die (kostenmäßige) Trennung beruflicher und privater Telefonate, setzt aber verschiedene Funktionalitäten voraus, die in vielen Kommunikationsnetzen die durch die jeweiligen Standards gesetzten Grenzen überschreiten. So ist z.B. das Wählen eines Sonderzeichens wie des in der EP 1 091 604 A2 zur Unterscheidung beruflicher und privater Telefonate vorgeschlagenen "*" gemäß GSM-Standard überhaupt nicht möglich. Das Wählen einer Rufnummer wie *02034499080 führte vielmehr zu einer Fehlermeldung, wenn der Kunde nicht besondere Dienste abonniert hat.

Um die genannten Grenzen des jeweiligen Standards, z.B. des GSM-Standards, überschreiten zu können, muß in dem Teilnehmeridentifikationsprofil vermerkt sein, daß der Kunde zur Teilnahme an bestimmten zusätzlichen Diensten berechtigt ist, was nachfolgend kurz als "Dienstermächtigung" bezeichnet wird. Bei solchen Diensten kann es sich insbesondere um die sogenannten CAMEL-Dienste handeln, also um Dienste außerhalb des eigentlichen Standards, so daß der Kunde bei Nutzung dieser Dienste quasi nach Art eines VPN (Virtual Private Network) über das Kommunikationsnetz mit einer die jeweiligen Dienste ermöglichenden Dienstzentrale (Service Control Point - SCP) verbunden wird.

Selbst wenn nun im Teilnehmeridentifikationsprofil vermerkt ist, daß der Kunde zur Teilnahme an den zusätzlichen Diensten berechtigt ist, wird bei dem Verfahren gemäß der EP 1 091 604 A2 in jedem Fall dem angerufenen Teilnehmer diejenige MSISDN angezeigt, über die auch die Abrechnung der jeweiligen Mobilfunkverbindung erfolgt. Ruft also ein Firmenmitarbeiter einen Kunden versehentlich unter Verwendung seiner privaten Rufnummer an, so wird diese dem Kunden angezeigt.

### AUFGABE UND ZUSAMMENFASSUNG DER ERFINDUNG

Der Erfindung liegt die Aufgabe zugrunde, ein Verfahren und eine Anordnung der eingangs genannten Art anzugeben, welche es ermöglichen, anstelle der über die Teilnehmeridentifikationsnummer dem von dem Kunden des Mobilfunkanbieters verwendeten Teilnehmeridentifikationsmodul zugeordneten MSISDN eine vordefinierte andere Information beim Aufbau einer Mobilfunkverbindung zu einem angerufenen Endgerät zu übertragen.

Die Aufgabe wird hinsichtlich eines Verfahrens und einer Anordnung zum Übermitteln einer vordefinierten Information beim Aufbau einer von einem mobilen Kommunikationsendgerät eines Kunden eines Mobilfunkanbieters abgehenden Mobilfunkverbindung zu einem angerufenen Endgerät von einem Verfahren mit den Merkmalen des Anspruchs 1 bzw. einer Anordnung mit den Merkmalen des Anspruchs 9 gelöst. Die jeweiligen Unteranspruche betreffen vorteilhafte Aus- bzw. Durchführungsformen. Der nebengeordnete Anspruch 13 betrifft ein Teilnehmeridentifikationsmodul, das vorteilhaft bei der Ausführung des erfindungsgemäßen Verfahrens bzw. der Realisierung der erfindungsgemäßen Anordnung Verwendung finden.

Weitere Einzelheiten und Vorteile der Erfindung ergeben sich aus der nachfolgenden rein beispielhaften und nicht-beschränkenden Beschreibung verschiedener Ausführungsbeispiele in Verbindung mit der Zeichnung.

### KURZE BESCHREIBUNG DER ZEICHNUNG

- Fig. 1: zeigt schematisch die grundsätzliche Architektur eines ersten Ausführungsbeispiels einer erfindungsgemäßen Anordnung und verdeutlicht auch den Ablauf der einzelnen Verfahrensschritte bei diesem Ausführungsbeispiel.
- Fig. 2: zeigt schematisch die grundsätzliche Architektur eines zweiten Ausführungsbeispiels einer erfindungsgemäßen Anordnung und verdeutlicht auch den Ablauf der einzelnen Verfahrensschritte bei diesem Ausführungsbeispiel.

### BESCHREIBUNG BEVORZUGTER AUSFÜHRUNGSFORMEN

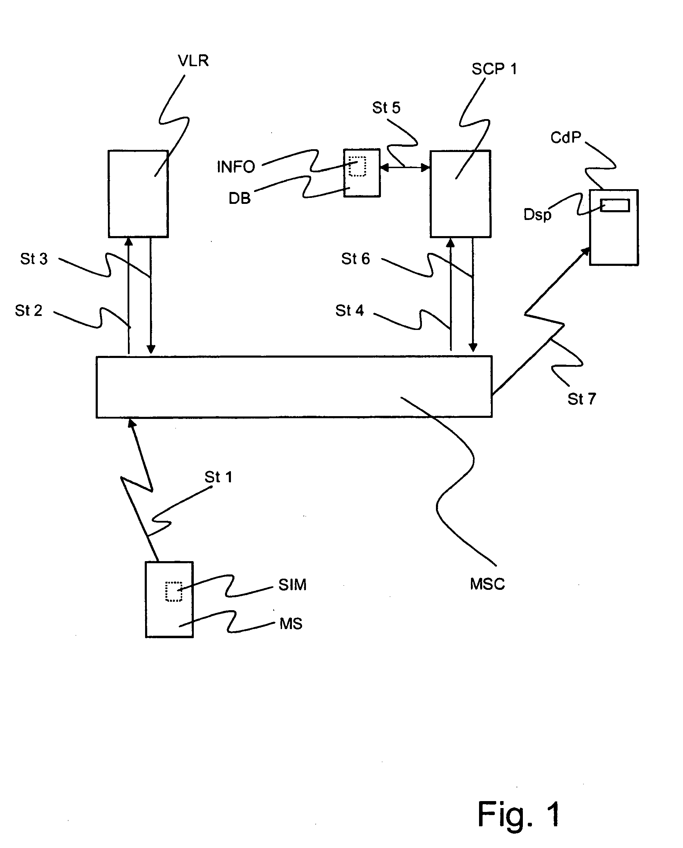

In der Fig. 1 ist eine erfindungsgemäße Anordnung zum Übermitteln einer vordefinierten Information INFO beim Aufbau einer von einem mobilen Kommunikationsendgerät MS eines Kunden eines Mobilfunkanbieters abgehenden Mobilfunkverbindung zu einem angerufenen Endgerät CdP gezeigt. Dabei wird zum Zwecke der nachfolgenden beispielhaften Veranschaulichung davon ausgegangen, daß die Mobilfunkverbindung in einem Mobilfunknetz nach GSM-Standard aufgebaut werden soll, das das CAMEL-Protokoll unterstützt, ohne daß die Erfindung darauf beschränkt wäre. Daher werden nachfolgend die im GSM-Standard üblichen Begriffe verwendet, wie z.B. "Besucherregister" (Visitor Location Register - VLR), wobei für den Fachmann jedoch klar ist, daß es sich dabei nicht notwendigerweise um ein übliches VLR handeln muß, sondern sich vielmehr prinzipiell eine beliebige Datenbank handeln kann, die von einer Vermittlungsstelle beim Rufaufbau daraufhin abgefragt wird, ob der die Verbindung anfragende Teilnehmer überhaupt zur Verwendung des Mobilfunknetzes berechtigt ist. Gleiches gilt mutatis mutandis auch für das sog. Heimatregister.

Die in Fig. 1 gezeigte Anordnung umfaßt eine Mobilfunkvermittlungsstelle MSC, der eine in dieser Anmeldung als Besucherregister VLR bezeichnete Datenbank zugeordnet ist. Wenn sich ein mobiles Endgerät bei der Vermittlungsstelle MSC anmeldet, was üblicherweise automatisch bei Eintritt in dem Empfangsbereich der Vermittlungsstelle erfolgt, erfragt das Besucherregister in der Regel bei einer weiteren Datenbank, dem sogenannten Heimatregister (Home Location Register - HLR) bestimmte Daten, die für den Aufbau einer Verbindung zu und von dem Endgerät notwendig sind und speichert diese temporär ab. Der genaue Ablauf dieser Prozedur ist üblicherweise in den Standardspezifikationen des jeweiligen Netzes festgelegt. Selbstverständlich können in besonderen Fällen VLR und HLR ein und dieselbe Datenbank sein.

Das in Fig. 1 gezeigte Kommunikationsendgerät MS, bei dem es sich z.B. um ein Mobiltelefon, einen "PDA" (Personal Digital Assistant) mit Mobilfunkfunktion und ein fest eingebautes Autotelefon handeln kann, befindet sich im Besitz eines Kunden eines Mobilfunkanbieters. In dem Kommunikationsendgerät ist, wie durch die punktierte Linie angedeutet, ein Teilnehmeridentifikationsmodul in Form einer SIM-Karte SIM angeordnet, wobei die SIM-Karte dem Kunden von dem Mobilfunkanbieter zur Verfügung gestellt wird.

In der SIM-Karte ist wenigstens eine Teilnehmeridentifikationsnummer, die sogenannte IMSI (International Mobile Subscriber Identity) gespeichert. In dem erwähnten Heimatregister ist jeder Teilnehmeridentifikationsnummer eine Rufnummer, die sogenannte MSISDN (Mobile Subscriber ISDN Number) zugeordnet. Jeder Rufnummer ist dabei ein bestimmtes Teilnehmerprofil in an sich bekannter und daher hier nicht weiter beschriebener Weise zugeordnet.

Wenigstens einem der Teilnehmerprofile ist eine Dienstermächtigung, insbesondere in Form einer sogenannten O-CSI (Originating CAMEL Subscription Information) zugeordnet, die die Information enthält, daß der Kunde bestimmte zusätzliche Dienste abonniert hat und entsprechend zur Teilnahme an bestimmten Zusatzdiensten berechtigt ist. Erfindungsgemäß ist dabei insbesondere an sogenannte CAMEL-Dienste (CAMEL - Customized Applications for Mobile networks Enhanced Logic) gedacht, die im GSM-Standard z.B. die Eingabe eines Sonderzeichens wie "*" bei der Anwahl einer Rufnummer gestatten, was dann z.B. zum Auslösen des hier beschriebenen Zusatzdienstes "Übermittlung der Information INFO" genutzt werden kann. Bei der zu übertragenden vordefinierten Information wird es sich im Regelfall und vor allem bei der bevorzugten Ausführungsform um eine Rufnummer handeln die von der Rufnummer MSISDN, die der Teilnehmeridentifikationsnummer IMSI zugeordnet ist, die beim Rufaufbau von dem mobilen Kommunikationsendgerät MS über die Mobilfunkvermittlungsstelle MSC an das Besucherregister VLR übertragen wird, abweicht. Beispielsweise kann es sich bei der Information INFO um die Festnetzrufnummer einer Firma handeln, bei der der Benutzer des mobilen Kommunikationsendgerätes MS angestellt ist.

Wie nachfolgend beschrieben wird, kann der Zusatzdienst "Übermittlung der Information INFO" auf unterschiedliche Weisen ausgelöst werden. Es kann z.B. vorgesehen sein, daß besagte Information grundsätzlich bei jedem Rufaufbau in das Generic-Number-Feld eingetragen wird. Es kann aber vorgesehen sein, daß besagte Information nur dann in das Generic-Number-Feld eingetragen wird, wenn der Benutzer des mobilen Kommunikationsendgerätes die anzuwählende Rufnummer mit einem Zusatzcode versieht oder daß besagte Information immer dann übertragen wird, wenn der Benutzer des mobilen Kommunikationsendgerätes MS die anzuwählende Rufnummer nicht mit einem Zusatzcode versieht. Hier kann der Fachmann vorteilhaft die im jeweiligen Einsatzfall optimale Variante wählen.

Da es aufgrund technischer Beschränkungen manchmal nicht gewünscht ist, jedem Teilnehmerprofil die entsprechende Dienstermächtigung zu erteilen, kann dann, wenn die Anforderung zum Aufbau einer Mobilfunkverbindung unter Verwendung einer SIM-Karte erfolgt, deren über die IMSI und die MSISDN zugeordnetem Teilnehmerprofil die entsprechende Dienstermächtigung fehlt, von einem Besucherregister VLR einer Mobilfunkvermittlungsstelle MSC, in deren Einzugsgebiet die Anforderung zum Rufaufbau erfolgt, für die weiteren Schritte beim Rufaufbau diejenigen Rufnummer (nachfolgend Master-MSISDN genannt) rückzumelden, der das Teilnehmerprofil mit der Dienstermächtigung zugeordnet ist. Dies ist Gegenstand einer anderen Patentanmeldung derselben Anmelderin, kann aber prinzipiell auch bei dem hier beschriebenen Verfahren zum Einsatz kommen, um dann, wenn der Kunde des Netzbetreibers über mehrere SIM-Karten verfügt, von denen nur einer die erforderliche Dienstermächtigung zugeordnet ist, dem Kunden in jedem Fall die Teilnahme an dem hier beschriebenen Zusatzdienst zu ermöglichen.

Es sein nun zum Zwecke der beispielhaften Beschreibung folgende Konstellation gegeben: der im Endgerät MS befindlichen SIM-Karte SIM sind über die in ihr gespeicherte individuelle IMSI eine MSISDN und ein Teilnehmerprofil zugeordnet, das die gewünschte Dienstermächtigung O-CSI für einen bestimmten Dienst aufweist.

Im durch den Pfeil St 1 angedeuteten ersten Verfahrensschritt wird nach entsprechender Benutzereingabe von dem Endgerät MS über an ein sich bekanntes, hier nicht dargestelltes sogenanntes Basisstationssubsystem (BSS) eine Verbindung mit der Vermittlungsstelle MSC aufgebaut. Dabei wird der Vermittlungsstelle die IMSI übergeben.

Im GSM-Standard besteht eine IMSI aus den drei Ziffernblöcken MCC (Mobile Country Code), MNC (Mobile Network Code) und der MSIN (Mobile Subscriber Identification Number).

Im Schritt St 2 wird ein Teil der übergebenen IMSI, nämlich die MSIN im Besucherregister VLR authentifiziert. Wie oben erwähnt enthält das Besucherregister dazu eine Teilkopie von bestimmten Einträgen in dem Heimatregister HLR.

Findet das Besucherregister VLR ggf. nach Datenabgleich mit dem Heimatregister HLR zu der MSIN einen entsprechenden Eintrag, so meldet es an die Vermittlungsstelle MSC im Schritt St 3 zurück, über welche Dienstermächtigungen der Benutzer verfügt bzw. welche Dienste er abonniert hat, so daß dann von der MSC die entsprechenden Dienste gestartet werden können. Im vorliegenden Fall startet die Vermittlungsstelle MSC im Verfahrensschritt St 4 einen Dialog mit einer Dienstzentrale SCP, die bei diesem Ausführungsbeispiel auf eine Datenbank DB zugreifen kann, in welcher die an das angerufene Endgerät CdP zu übertragene Information INFO gespeichert ist. Die Dienstzentrale ist i.d.R. Teil eines sog. "Intelligent-Network", kurz "IN", oder eines Next-Generation-Intelligent-Network (kurz "NGIN").

Anhand der vom MSC an die SCP übertragenen MSISDN wird besagte Information ermittelt, aus der Datenbank ausgelesen (Verfahrensschritt St 5) und dann von der Dienstzentrale SCP in das Generic-Number-Feld der sogenannten Connect-Nachricht eingetragen, die die Dienstzentrale im Verfahrensschritt St 6 an die MSC sendet. Das MSC übernimmt diese im Generic-Number-Feld eingetragene Information für den weiteren, in an sich bekannter Weise erfolgenden Rufaufbau in die ISUP-Signalisierungsnachricht, so daß besaget Information schließlich im Verfahrensschritt St 7 an das angerufene Endgerät CdP übertragen wird, wo sie auf einer Ausgabe Dsp, in aller Regel einem Display, ausgegeben, in Regelfall also angezeigt wird.

Es sei an dieser Stelle betont, daß neben der Dienstzentrale SCP selbstverständlich weitere, hier nicht dargestellte Dienstzentralen vorgesehen sein können, die von der MSC vor oder nach der Dienstzentrale SCP angesprochen werden, um weitere Dienste auszuführen.

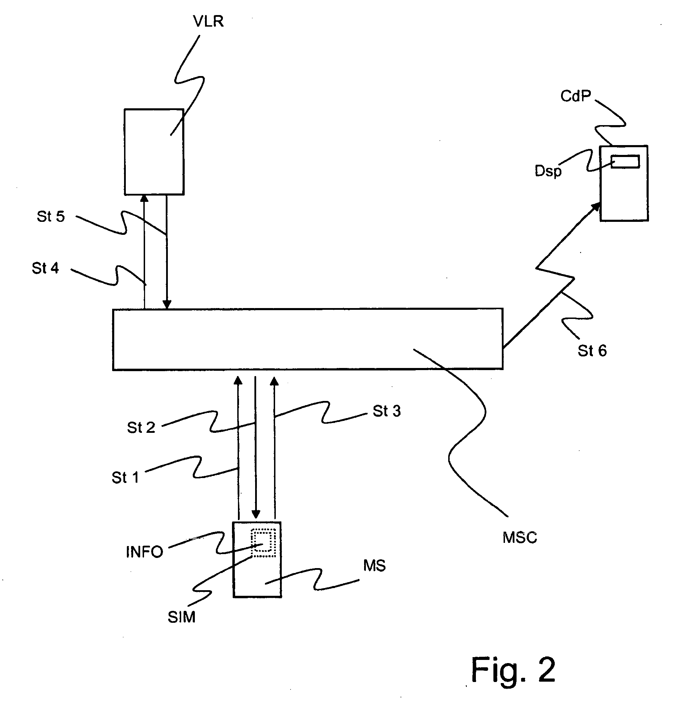

Bei einer in Fig. 2 rein schematisch dargestellten zweiten Ausführungsform ist die zu übertragende Information INFO in einer Speichereinrichtung gespeichert, die Teil der SIM-Karte SIM ist, die vom Benutzer des mobilen
Kommunikationsendgerätes MS verwendet wird. Startet nun der Benutzer z.B. durch Eingabe eines vordefinierten Triggers, z.B. eines USSD-Strings gefolgt von der anzuwählenden Zielrufnummer oder anhand einer in vordefinierte Prä- und/oder Suffixe wie "*" oder "#" eingebetteten Zielrufnummer eine entsprechende SIM-Applikation, so wird im Verfahrensschritt St 1 von der SIM-Applikation die zu übertragende Information INFO aus der Speichereinrichtung ausgelesen und noch vor dem eigentlichen Aufsetzen des Gesprächs z.B. in einer USSD-Nachricht der Vermittlungsstelle MSC übergeben. Die Verbindung zwischen Kommunikationsendgerät MS und Vermittlungsstelle MSC erfolgt wie oben im Zusammenhang mit Fig. 1 beschrieben in an sich bekannter Weise über ein hier nicht dargestelltes Basisstationssubsystem (BSS).

Vorteilhaft ist bei dieser Ausführungsform vorgesehen, daß die SIM-Applikation eine Bestätigung über den Empfang der Information seitens des MSC erwartet, d.h. es wird ein synchroner Dialog zwischen Kommunikationsendgerätes MS und MSC geführt. Dadurch können Timing-Probleme vermieden werden.

Um MSC-seitig die übergebene Information INFO der ISUP-Signalisierungsnachricht beim eigentlichen Gesprächsaufbau zuordnen zu können, ist erfindungsgemäß vorgesehen, daß besagte Information INFO von der Mobilfunkvermittlungsstelle MSC unter Zuordnung eines Identifikationscodes temporär gespeichert wird.

Im Verfahrensschritt St 2 bestätigt die Vermittlungsstelle MSC dem Kommunikationsendgerät MS den Empfang der Information INFO und übermittelt dabei den zugeordneten Identifikationscode, der von der SIM-Applikation dann der im Verfahrensschritt St 3 an die Vermittlungsstelle gesandten ISUP-Signalisierungsnachricht z.B. als Prä- oder Suffix der MSISDN (auch A-Rufnummer genannt) oder angerufenen Rufnummer (auch B-Rufnummer genannt) hinzugefügt wird.

Wenn dann die zum Gesprächsaufbau gehörende ISUP-Signalisierungsnachricht bei der Vermittlungsstelle MSC eintrifft, erfolgt auf Basis des Identifikationscodes ein Matching zwischen der ISUP-Signalisierungsnachricht und der bereits im ersten Schritt übergebenen Information INFO. Das MSC kann die zu signalisierende Information dann in das Generic-Number-Feld der ISUP-Signalisierungsnachricht eintragen, welches die Information enthält, die beim angerufenen Teilnehmer CdP auf der Ausgabe Dsp ausgegeben, insbesondere angezeigt werden soll. Der weitere Verbindungsaufbau zum angerufenen Teilnehmer erfolgt in an sich bekannter Weise in den Verfahrensschritten St 4, St 5 und St 6 unter Abfrage des oben beschriebenen Besucherregisters VLR und ggf., wie ebenfalls oben beschrieben, unter Einbeziehung evtl. vom Benutzer des Kommunikationsendgerätes MS abonnierter IN-Dienste.

Bei einer dritten Ausführungsform der Erfindung ist die zu übertragende Information wiederum wie in dem im Fig. 2 gezeigten Beispiel in einer Speichereinrichtung gespeichert, die Teil der SIM-Karte ist, die vom Benutzer eines mobilen Kommunikationsendgerätes verwendet wird. Anders als bei dem in Fig. 2 dargestellten Beispiel wird jedoch die aus der Speichereinrichtung ausgelesene Information direkt dann, wenn der Benutzer dies wünscht, seitens des Kommunikationsendgerätes beim Anwählen einer Zielrufnummer der ISUP-Signalisierungsnachricht hinzugefügt. Dies kann insbesondere so erfolgen, daß die Information z.B. mit einem Präfix oder einem sonstigen Code konkateniert wird und das Ergebnis der Signalisierung der angewählten Rufnummer hinzugefügt wird. Die Verbindung zwischen Kommunikationsendgerät MS und Vermittlungsstelle MSC erfolgt wie oben im Zusammenhang mit Fig. 1 beschrieben in an sich bekannter Weise über ein hier nicht dargestelltes Basisstationssubsystem (BSS).

Das Präfix bzw. der sonstige Code hat dann bei diesem Ausführungsbeispiel, wenn die Vermittlungsstelle MSC erfindungsgemäß ausgebildet ist, für die Vermittlungsstelle die Funktion eines Trennsymbols, um die angewählte Rufnummer und die zu übertragende Information beim Rufaufbau in der ISUP-Signalisierung seitens der Vermittlungsstelle MSC wieder voneinander trennen zu können. Die Vermittlungsstelle trägt dann die zu übertragende Information in das Generic-Number-Feld der ISUP-Signalisierungsnachricht ein.

Im Rahmen des Erfindungsgedankens sind zahlreiche Abwandlungen und Weiterbildungen möglich, die sich zum Beispiel auf die Art der Auslösung des Dienstes der Übertragung der vordefinierten Information beziehen.

Die Erfindung ermöglicht schließlich auch ein neues Geschäftskonzept, wonach es einem Mobilfunkanbieter möglich ist, einem Kunden einen Zusatzdienst anzubieten, der es insbesondere ermöglicht, bei allen oder bestimmten Gesprächen die eigentliche Rufnummer eines anrufenden Mobiltelefons durch eine Festnetznummer zu ersetzen.

## Patentansprüche

1. Verfahren zum Übermitteln einer vordefinierten Information (INFO) beim Aufbau einer von einem mobilen Kommunikationsendgerät (MS) eines Kunden eines Mobilfunkanbieters abgehenden Mobilfunkverbindung zu einem angerufenen Endgerät,
- wobei der Kunde über ein Teilnehmeridentifikationsmodul (SIM) verfügt, dem wenigstens eine Teilnehmeridentifikationsnummer (IMSI) zugeordnet ist,
- wobei jeder Teilnehmeridentifikationsnummer eine Rufnummer (MSISDN) zugeordnet ist,
- wobei jeder Rufnummer ein Teilnehmerprofil zugeordnet ist,
- wobei eines der Teilnehmerprofile eine Dienstermächtigung (O-CSI) zur Teilnahme an bestimmten zusätzlichen Diensten enthält,
- wobei der Rufaufbau unter Verwendung einer ISUP-Signalisierungsnachricht mit einem Generic-Number-Feld erfolgt,
- wobei die an das angerufene Endgerät zu übertragende Information in einer Speichereinrichtung (SIM; DB) gespeichert ist,
- wobei bei Vorliegen vordefinierbarer Randbedingungen besagte Information aus der Speichereinrichtung ausgelesen und in das Generic-Number-Feld der ISUP-Signalisierungsnachricht eingetragen wird und
- wobei besagte Information auf einer Ausgabevorrichtung des angerufenen Endgerätes ausgegeben wird,
**dadurch gekennzeichnet,**
- **daß** besagte Information (INFO) an eine Mobilfunkvermittlungsstelle (MSC) übertragen und dort unter Zuordnung eines Identifikationscodes temporär gespeichert wird, bevor seitens des mobilen Kommunikationsendgerätes eine ISUP-Signalisierungsnachricht betreffend eine anzuwählende Rufnummer erzeugt wird, wobei die ISUP-Signalisierungsnachricht auch einen Hinweis auf den Identifikationscode enthält, und
- **daß** die Mobilfunkvermittlungsstelle nach Erhalt der ISUP-Signalisierungsnachricht besagte Information in das Generic-Number-Feld einträgt.

2. Verfahren nach Anspruch 1, **dadurch gekennzeichnet, daß** die zu übertragende vordefinierte Information eine Rufnummer ist, die von der Rufnummer (MSISDN) abweicht, die der Teilnehmeridentifikationsnummer (IMSI) zugeordnet ist, die beim Rufaufbau von dem mobilen Kommunikationsendgerät (MS) über eine Mobilfunkvermittlungsstelle (MSC) an ein Besucherregister (VLR) übertragen wird.

3. Verfahren nach Anspruch 1 oder 2, **dadurch gekennzeichnet, daß** besagte Information (INFO) grundsätzlich bei jedem Rufaufbau in das Generic-Number-Feld eingetragen wird.

4. Verfahren nach Anspruch 1 oder 2, **dadurch gekennzeichnet, daß** besagte Information (INFO) nur dann in das Generic-Number-Feld eingetragen wird, wenn der Benutzer des mobilen Kommunikationsendgerätes (MS) die anzuwählende Rufnummer mit einem Zusatzcode versieht.

5. Verfahren nach Anspruch 1 oder 2, **dadurch gekennzeichnet, daß** besagte Information (INFO) immer dann übertragen wird, wenn der Benutzer des mobilen Kommunikationsendgerätes (MS) die anzuwählende Rufnummer nicht mit einem Zusatzcode versieht.

6. Verfahren nach einem der Ansprüche 1 bis 5, wobei die Speichereinrichtung (DB) im Zugriff einer Dienstzentrale (SCP) steht, **dadurch gekennzeichnet, daß** besagte Information (INFO) aus der Speichereinrichtung von der Dienstzentrale ausgelesen und in das Generic-Number-Feld eingetragen wird.

7. Verfahren nach einem der Ansprüche 1 bis 5, wobei die Speichereinrichtung Teil des Teilnehmeridentifikationsmoduls (SIM) ist, **dadurch gekennzeichnet, daß** von der Mobilfunkvermittlungsstelle eine Bestätigung über den Empfang besagter Information an das mobile Kommunikationsendgerät gesandt wird,

8. Verfahren nach einem der Ansprüche 1 bis 5, wobei die Speichereinrichtung Teil des Teilnehmeridentifikationsmoduls (SIM) ist, **dadurch gekennzeichnet, daß** besagte Information (INFO) seitens des mobilen Kommunikationsendgerätes (MS) der beim Rufaufbau an eine Mobilfunkvermittlungsstelle (MSC) gesandten ISUP-Signalisierungsnachricht mit einem Trenncode zugefügt wird, wobei der Trenncode beim Lesen der ISUP-Signalisierungsnachricht in der Mobilfunkvermittlungsstelle bewirkt, daß die Mobilfunkvermittlungsstelle besagte Information in das Generic-Number-Feld einträgt.

9. Anordnung zum Übermitteln einer vordefinierten Information (INFO) beim Aufbau einer von einem mobilen Kommunikationsendgerät (MS) eines Kunden eines Mobilfunkanbieters abgehenden Mobilfunkverbindung zu einem angerufenen Endgerät, umfassend
- wenigstens ein mobiles Kommunikationsendgerät (MS), in welchem sich ein Teilnehmeridentifikationsmodul (SIM) befindet, in dem wenigstens eine Teilnehmeridentifikationsnummer (IMSI) gespeichert ist,
- eine Mobilfunkvermittlungsstelle (MSC), der ein Besucherregister (VLR) zugeordnet ist,
- wobei jeder Teilnehmeridentifikationsnummer (IMSI) eine Rufnummer zugeordnet (MSISDN) ist,
- wobei jeder Rufnummer (MSISDN) ein Teilnehmerprofil zugeordnet ist,
- wobei eines der Teilnehmerprofile eine Dienstermächtigung (O-CSI) zur Teilnahme an bestimmten zusätzlichen Diensten enthält,
- wobei der Rufaufbau unter Verwendung einer ISUP-Signalisierungsnachricht mit einem Generic-Number-Feld erfolgt,
- wobei eine Speichereinrichtung (SIM; DB) vorgesehen ist, in welcher die an das angerufene Endgerät zu übertragende Information (INFO) gespeichert ist,
- wobei Randbedingungen vordefiniert sind, bei deren Vorliegen besagte Information aus der Speichereinrichtung ausgelesen und in das Generic-Number-Feld der ISUP-Signalisierungsnachricht eingetragen wird,
- wobei das angerufene Endgerät über eine Ausgabevorrichtung zur Ausgabe der in das Generic-Number-Feld der ISUP-Signalisierungsnachricht eingetragenen Information verfügt und
- wobei die Speichereinrichtung, in der besagte Information (INFO) gespeichert ist, Teil des Teilnehmeridentifikationsmoduls (SIM) ist,
**dadurch gekennzeichnet,**
- **daß** besagte Information (INFO) an eine Mobilfunkvermittlungsstelle (MSC) übertragen und dort unter Zuordnung eines Identifikationscodes temporär gespeichert wird, bevor seitens des mobilen Kommunikationsendgerätes eine ISUP-Signalisierungsnachricht betreffend eine anzuwählende Rufnummer erzeugt wird, wobei die ISUP-Signalisierungsnachricht auch einen Hinweis auf den Identifikationscode enthält, und
- **daß** die Mobilfunkvermittlungsstelle nach Erhalt der ISUP-Signalisierungsnachricht besagte Information in das Generic-Number-Feld einträgt.

10. Anordnung nach Anspruch 9, **dadurch gekennzeichnet, daß** die zu übertragende vordefinierte Information eine Rufnummer ist, die von der Rufnummer (MSISDN) abweicht, die der Teilnehmeridentifikationsnummer (IMSI) zugeordnet ist, die beim Rufaufbau von dem mobilen Kommunikationsendgerät (MS) über eine Mobilfunkvermittlungsstelle (MSC) an ein Besucherregister (VLR) übertragen wird.

11. Anordnung nach Anspruch 9 oder 10, **dadurch gekennzeichnet, daß** die Speichereinrichtung (DB), in der besagte Information (INFO) gespeichert ist, im Zugriff einer Dienstzentrale (SCP) steht, so daß besagte Information aus der Speichereinrichtung von der Dienstzentrale ausgelesen und in das Generic-Number-Feld eingetragen werden kann.

## Claims

1. A method for transferring a predefined information (INFO) upon establishing a mobile connection from a mobile communications terminal (MS) of a customer of a mobile communications provider to a called terminal,
- wherein the customer is in possession of a subscriber identification module (SIM), which has at least one subscriber identification number (IMSI) assigned to it,
- wherein each subscriber identification number has a telephone number (MSISDN) assigned to it,
- wherein each telephone number has a subscriber profile assigned to it,
- wherein one of the subscriber profiles contains a service authorisation (O-CSI) for participating in certain additional services,
- wherein the call is established using an ISUP signalling message with a generic number field,
- wherein the information to be transferred to the called terminal is stored in a storage unit (SIM; DB),
- wherein, if predefinable basic conditions are fulfilled, said information is read from the storage unit and is entered into the generic number field of the ISUP signalling message, and
- wherein said information is output on an output device of the called terminal, **characterised**
- **in that** said information (INFO) is transferred to a mobile switching centre (MSC) and temporarily stored there under assignment of an identification code, before an ISUP signalling message relating to a telephone number to be dialled is generated on the part of the mobile communications device, wherein the ISUP signalling message also includes a reference to the identification code, and
- **in that** the mobile switching centre, after receiving the ISUP signalling message, enters said information into the generic number field.

2. The method according to claim 1, **characterised in that** the predefined information to be transferred is a telephone number which is different from the telephone number (MSISDN) assigned to the subscriber identification number (IMSI), which upon call establishment is transferred from the mobile communications device (MS) to a visitor location register (VLR) via a mobile communications centre (MSC).

3. The method according to claim 1 or 2, **characterised in that** said information (INFO) is entered into the generic number field generally for each call being established.

4. The method according to claim 1 or 2, **characterised in that** said information (INFO) is entered into the generic number field only if the user of the mobile communications device (MS) provides the telephone number to be dialled with an additional code.

5. The method according to claim 1 or 2, **characterised in that** said information (INFO) is always transferred when the user of the mobile communications device (MS) does not provide the telephone number to be dialled with an additional code.

6. The method according to one of claims 1 to 5, wherein the storage unit (DB) is accessible to a service centre (SCP), **characterised in that** said information (INFO) is read from the storage unit by the service centre and entered into the generic number field.

7. The method according to one of claims 1 to 5, wherein the storage unit is part of a subscriber identification module (SIM), **characterised in that** confirmation on the receipt of said information is sent by the mobile switching centre to the mobile communications device.

8. The method according to one of claims 1 to 5, wherein the storage unit is part of the subscriber identification module (SIM), **characterised in that** said information (INFO) of the ISUP signalling message sent to a mobile switching centre (MSC) upon call establishment is added on the part of the mobile communications device (MS) together with a separating code, wherein the separating code, when the ISUP signalling message is read in the mobile switching centre, causes the mobile switching centre to enter said information into the generic number field.

9. An arrangement for transferring a predefined information (INFO) upon establishing a mobile connection from a mobile communications device (MS) of a customer of a mobile communications provider to a called terminal, comprising
- at least one mobile communications device (MS), in which a subscriber identification module (SIM) is present, in which at least one subscriber identification number (IMSI) is stored,
- a mobile switching centre (MSC), which has a visitor location register (VLR) assigned to it,
- wherein each subscriber identification number (IMSI) has a telephone number (MSISDN) assigned to it,
- wherein each telephone number (MSISDN) has a subscriber profile assigned to it,
- wherein one of the subscriber profiles includes a service authorisation (O-CSI) for participating in certain additional services,
- wherein the call is established using an ISUP signalling message with a generic number field,
- wherein a storage unit (SIM; DB) is provided in which the information (INFO) to be transferred to the called terminal is stored,
- wherein basic conditions are predefined, which if fulfilled cause said information to be read from the storage unit and to be entered into the generic number field of the ISUP signalling message,
- wherein the called terminal is in possession of an output device for outputting the information entered into the generic number field of the ISUP signalling message, and
- wherein the storage unit in which said information (INFO) is stored, is part of the subscriber identification module (SIM),
**characterised**
- **in that** said information (INFO) is transferred to a mobile switching centre (MSC) and is temporarily stored in there under assignment of an identification code, before an ISUP signalling message relating to a telephone number to be called is generated on the part of the mobile communications device, wherein the ISUP signalling message also includes a reference to the identification code, and
- **in that** the mobile switching centre upon receipt of the ISUP signalling message enters said information into the generic number field.

10. The arrangement according to claim 9, **characterised in that** the predefined information to be transferred is a telephone number, which is different from the telephone number (MSISDN) assigned to the subscriber identification number (IMSI), which upon call establishment is transferred from the mobile communications device (MS) to a visitor location register (VLR) via a mobile switching centre (MSC).

11. The arrangement according to claim 9 or 10, **characterised in that** the storage unit (DB), in which said information (INFO) is stored, is accessible to a service centre (SCP) so that said information can be read from the storage unit by the service centre and entered into the generic number field.

## Revendications

1. Procédé de transmission d'une information prédéfinie (INFO) lors de l'établissement d'une connexion de téléphonie mobile sortant d'un terminal mobile de communication (MS) d'un client d'un fournisseur de téléphonie mobile, vers un terminal appelé,
- le client disposant d'un module d'identification d'abonné (SIM) auquel est associé au moins un numéro d'identification d'abonné (IMSI),
- à chaque numéro d'identification d'abonné étant associé un numéro d'appel (MSISDN),
- à chaque numéro d'appel étant associé un profil d'abonné,
- l'un des profils d'abonné comprenant une autorisation de services (O-CSI) pour participer à des services supplémentaires déterminés,
- l'établissement d'appel se faisant en utilisant un message de signalisation ISUP avec un champ de numéro générique,
- l'information à transmettre au terminal appelé étant mémorisée dans un dispositif de mémorisation (SIM ; DB),
- en cas de présence de conditions marginales aptes à être prédéfinies, ladite information étant extraite dudit dispositif de mémorisation et étant enregistrée dans ledit champ de numéro générique du message de signalisation ISUP, et
- ladite information étant sortie sur un dispositif de sortie du terminal appelé, **caractérisé par le fait**
- **que** ladite information (INFO) est transmise à un centre de commutation du service mobile (MSC) et y est mémorisée temporairement avec l'association d'un code d'identification avant qu'un message de signalisation ISUP quant à un numéro d'appel à appeler soit généré de la part du terminal mobile de communication, ledit message de signalisation ISUP contenant également une indication relative au code d'identification, et
- **que** le centre de commutation du service mobile, après avoir reçu le message de signalisation ISUP, enregistre ladite information dans le champ de numéro générique.

2. Procédé selon la revendication 1, **caractérisé par le fait que** l'information prédéfinie à transmettre est un numéro d'appel qui diffère du numéro d'appel (MSISDN) qui est associé au numéro d'identification d'abonné (IMSI) lequel est transmis, lors de l'établissement d'appel, depuis le terminal mobile de communication (MS) via un centre de commutation du service mobile (MSC) à un enregistreur de localisation des visiteurs (VLR).

3. Procédé selon la revendication 1 ou 2, **caractérisé par le fait que** ladite information (INFO) est enregistrée en principe dans le champ de numéro générique lors de chaque établissement d'appel.

4. Procédé selon la revendication 1 ou 2, **caractérisé par le fait que** ladite information (INFO) n'est enregistrée dans le champ de numéro générique que lorsque le numéro d'appel à appeler est muni d'un code supplémentaire par l'utilisateur du terminal mobile de communication (MS).

5. Procédé selon la revendication 1 ou 2, **caractérisé par le fait que** ladite information (INFO) est transmise toujours lorsque le numéro d'appel à appeler n'est pas muni d'un code supplémentaire par l'utilisateur du terminal mobile de communication (MS).

6. Procédé selon l'une quelconque des revendications 1 à 5, dans lequel ledit dispositif de mémorisation (DB) est en accès d'une centrale de services (SCP), **caractérisé par le fait que** ladite information (INFO) est extraite du dispositif de mémorisation par ladite centrale de services et est enregistrée dans le champ de numéro générique.

7. Procédé selon l'une quelconque des revendications 1 à 5, dans lequel ledit dispositif de mémorisation fait partie dudit module d'identification d'abonné (SIM), **caractérisé par le fait qu'**une confirmation relative à la réception de ladite information est envoyée depuis le centre de commutation du service mobile au terminal mobile de communication.

8. Procédé selon l'une quelconque des revendications 1 à 5, dans lequel ledit dispositif de mémorisation fait partie dudit module d'identification d'abonné (SIM), **caractérisé par le fait que** ladite information (INFO) de la part du terminal mobile de communication (MS) est ajoutée, avec un code de séparation, au message de signalisation ISUP envoyé à un centre de commutation du service mobile (MSC) lors de l'établissement d'appel, ledit code de séparation provoquant, lors de la lecture du message de signalisation ISUP dans le centre de commutation du service mobile, que le centre de commutation du service mobile enregistre ladite information dans le champ de numéro générique.

9. Ensemble de transmission d'une information prédéfinie (INFO) lors de l'établissement d'une connexion de téléphonie mobile sortant d'un terminal mobile de communication (MS) d'un client d'un fournisseur de téléphonie mobile, vers un terminal appelé, comprenant
- au moins un terminal mobile de communication (MS) à l'intérieur duquel est situé un module d'identification d'abonné (SIM) dans lequel est mémorisé au moins un numéro d'identification d'abonné (IMSI),
- un centre de commutation du service mobile (MSC) auquel est associé un enregistreur de localisation des visiteurs (VLR),
- à chaque numéro d'identification d'abonné (IMSI) étant associé un numéro d'appel (MSISDN),
- à chaque numéro d'appel (MSISDN) étant associé un profil d'abonné,
- l'un des profils d'abonné comprenant une autorisation de services (O-CSI) pour participer à des services supplémentaires déterminés,
- l'établissement d'appel se faisant en utilisant un message de signalisation ISUP avec un champ de numéro générique,
- un dispositif de mémorisation (SIM ; DB) étant prévu dans lequel est mémorisée l'information (INFO) à transmettre au terminal appelé,
- des conditions marginales étant prédéfinies en présence desquelles ladite information est extraite du dispositif de mémorisation et est enregistrée dans ledit champ de numéro générique du message de signalisation ISUP,
- le terminal appelé disposant d'un dispositif de sortie pour faire sortir ladite information enregistrée dans le champ de numéro générique du message de signalisation ISUP, et
- ledit dispositif de mémorisation où est mémorisée ladite information (INFO) fait partie du module d'identification d'abonné (SIM),
**caractérisé par le fait**
- **que** ladite information (INFO) est transmise à un centre de commutation du service mobile (MSC) et y est mémorisée temporairement avec l'association d'un code d'identification avant qu'un message de signalisation ISUP quant à un numéro d'appel à appeler soit généré de la part du terminal mobile de communication, ledit message de signalisation ISUP contenant également une indication relative au code d'identification, et
- **que** le centre de commutation du service mobile, après avoir reçu le message de signalisation ISUP, enregistre ladite information dans le champ de numéro générique.

10. Ensemble selon la revendication 9, **caractérisé par le fait que** ladite information prédéfinie à transmettre est un numéro d'appel qui diffère du numéro d'appel (MSISDN) qui est associé au numéro d'identification d'abonné (IMSI) lequel est transmis, lors de l'établissement d'appel, depuis le terminal mobile de communication (MS) via un centre de commutation du service mobile (MSC) à un enregistreur de localisation des visiteurs (VLR).

11. Ensemble selon la revendication 9 ou 10, **caractérisé par le fait que** ledit dispositif de mémorisation (DB) où est mémorisée ladite information (INFO) est en accès d'une centrale de services (SCP) de sorte que ladite information peut être extraite du dispositif de mémorisation par ladite centrale de services et être enregistrée dans le champ de numéro générique.
